# EUROPEAN PATENT SPECIFICATION

(11) **EP 1 686 853 B1**
(45) Date of publication and mention of the grant of the patent: **18.05.2011**
(21) Application number: 04819020.1
(22) Date of filing: 17.11.2004
(51) Int. Cl.: A01N 25/04, A01N 25/30

(54) **FUNGICIDAL AQUEOUS SUSPENSION CONCENTRATE**
FUNGIZIDES WÄSSRIGES SUSPENSIONSKONZENTRAT
CONCENTRE DE SUSPENSION FONGICIDE AQUEUSE

(30) Priority: 18.11.2003 KR 2003081464
(43) Date of publication of application: 09.08.2006
(73) Proprietor: LG Life Sciences Ltd., Seoul 150-010 (KR)
(72) Inventor: KANG, Kyung-Goo R & D Park, LG Life Sciences Ltd., Daejeon 305-728 (KR); KIM, Tae-Young R & D Park, LG Life Sciences Ltd., Daejeon 305-380 (KR); KIM, Dal-Soo R & D Park, LG Life Sciences Ltd., Daejeon 305-380 (KR); CHUN, Sam-Jae R & D Park, LG Life Sciences Ltd., Daejeon 305-380 (KR); JOE, Goon-Ho R & D Park, LG Life Sciences Ltd., Daejeon 305-380 (KR)
(74) Representative: Gillard, Richard Edward
(86) International application number: PCT/KR2004/002979
(87) International publication number: WO 2005/048707

(56) References cited:
- WO-A-00/08931
- WO-A-02/19821
- WO-A1-95/33754
- WO-A2-01/67863
- JP-A- 3 232 867

## Description

### TECHNICAL FIELD

The present invention relates to a stable aqueous suspension concentrate composition which comprises one more fungicidal active ingredients, and water soluble or water dispersible polyoxyalkylene alkyl ether, and which does not form gel in the preparation process and does not form caking during storage. Specifically, the composition of the present invention comprises water soluble or water dispersible polyoxyethylene alkyl ether, many of which are present in the form of paste or wax phase at room temperature, and thus it is possible to change such physical or chemical property as gel formation in the preparation process or caking formation during storage. Therefore, the composition of the present invention contains anti-gel forming and anti-caking agent, selected from one or more of the group consisting of ethyleneglycol, diethyleneglycol, propyleneglycol, and dipropylene-glycol; and methacrylic acid-methyl methacrylate-polyethyleneglycol graft copolymer as a dispersant to prevent the above phenomena; wherein the weight ratio of polyoxyalkylene alkyl ether to anti-gel forming and anti-caking agent is 1:1.5 to 1:6.

### BACKGROUND ART

It has been reported that polyoxyalkylene alkyl ether can improve the effect of various kinds of fungicides on pathogen of plant. An article by Grayson et al. (Effect of adjuvants on the performance of the new cereal fungicides, metconazole. I. Glasshouse trials. Pesticide Science, 1995, vol. 45, pp153-160) reported that nonionic surfactant such as polyoxyethylene alkyl ether including alkyl group having 12 to 14 carbons, etc. improves the activity of emulsion and suspension concentrate comprising metconazole on wheat powdery mildew. Another article by Sampson et al. (Effect of adjuvants on the performance of the new cereal fungicides, metconazole. II. Field trials. Pesticide Science, 1995, vol. 45, pp161-1 66) reported that a preparation prepared by adding polyoxyethylene alkyl ether including alkyl group having 12 to 14 carbons together with metconazole in a suitable ratio in packaging test does not reduce its effect as fungicidal agent only at 2/3 dotage of the original preparation, compared with using conventional emulsions. Also, another article by Geddens et al. [Surfactant effects on the curative and preventive activity of farmoxadone against grape downy mildew (Plasmopara viticola), Proceedings of 6th International Symposium on Adjuvants for Agrochemicals, 2001, pp363-368] reported that the curative and preventive effects of farmoxadone against grape downy mildew are improved by suitable polyoxyethylene alkyl ether. Another article by Yu et al. (Influence of surfactants on foliar uptake of dimethomorph into cucumber plant and fungicidal activity to cucumber downy mildew. J. Korean Soc. Agric. Chem. Biotechnol., 2001, vol. 44, pp109-115) reported that the curative effect of dimethomorph against cucumber downy mildew is improved by suitable polyoxyethylene alkyl ether. Other articles by Grayson et al. (Effect of adjuvants on the therapeutic activity of dimethornorph in controlling vine downy mildew. I. Survey of adjuvant types, Pesticide Science, 1996, vol. 46, pp199-206 and Effect of adjuvants on the therapeutic activity of dimethomorph in controlling vine downy mildew. II. Adjuvant mixtures, outdoor-hardened vines and one-pack formulations, Pesticide Science, 1996, vol. 46, pp207-213) reported that the effect of dimethomorph on the vine downy mildew is improved by suitable polyoxyethylene alkyl ether. In addition, an article by Grayson et al. (Adjuvant effects on the therapeutic control of potato late blight by dimethomorph wettable powder formulations. Pesticide Science, 1996, vol. 46, pp355-359) reported that the effect of dimethomorph on the potato late blight is improved by suitable polyoxyethylene alkyl ether.

Korean Patent Application Laid-Open No. 2001-0103501 teaches that polyoxyethylene alkyl ether having proper structure is effective as an agent for increasing the action of etharoxam. U.S. Patent 5,393,770 discloses that the fungicidal activity of benzyltriazolylcyclopentanes of a fungicidal substance is improved by polyoxyalkylene alkyl ether, and also describes an emulsion and solution composition containing polyoxyalkylene. In addition, U.S. Patent 5,905,072 discloses that the activity of various kinds of fungicides is increased by a variety of non-ionic surfactants such as polyoxyethylene alkyl ether. Korean Patent Application Laid-Open No. 2001-0078028 shows that the absorption property of dimethomorph into plant leaves is improved by polyoxyethylene alkyl ether, and describes a fungicidal composition containing the same.

However, the preparations described in the above articles and patents were prepared and tested by mixing polyoxyethylene alkyl ether at tank mix step, or in the form of wettable agent, emulsion, dispersion solution, etc. Thus, the preparations have such disadvantages as dust generation, and stability problem during storage, stability problem upon dilution, and toxicological problem due to use of excess organic solvent. Also, any of the above articles and patents did not mention an aqueous suspension concentrate composition comprising polyoxyalkylene alkyl ether with using water.

In fact, many water soluble or water dispersible polyoxyethylene alkyl ethers are present in the form of paste or wax phase at room temperature. When said polyoxyethylene alkyl ether is used in aqueous suspension concentrate composition, it is possible to form gel in the preparation, or cake during storage, due to the compound's physical or chemical property. For the reason, polyoxyethylene alkyl ether is almost not used in the preparation of general aqueous suspension concentrate preparation. Thus, no prior art exists regarding water soluble or water dispersible aqueous suspension concentrate composition, in particular aqueous suspension concentrate composition containing more than a certain amount of polyoxyethylene alkyl ether which is present in the form of paste or wax phase at room temperature, as the present invention.

WO 02/19821 discloses aqueous pesticidal suspensions comprising a pesticide, a non-ionic alkoxylate surfactant, a naphthalene sulphonate-formaldehyde condensate, a non-ionic polymethyl methacrylate-polyethylene oxide graft copolymer, other additives, and water.

WO 00/08931 discloses an aqueous suspension concentrate formulation comprising pyrimethanil, a polyoxyethylene-polyoxypropylene block copolymer surfactant and a naphthalene formaldehyde condensate surfactant.

The present invention provides an aqueous suspension concentrate composition comprising ethaboxam or fungicidal active ingredients for controlling various plant diseases. Specifically, the present invention provides an aqueous suspension concentrate composition comprising polyoxyethylene alkyl ether which is water soluble or water dispersible at room temperature, and is a substance known for increasing efficacy of various kinds of fungicides or expected to have action for increasing efficacy. The aqueous suspension concentrate composition comprising the above polyoxyethylene alkyl ether is advantageous in that dust is generated less than wettable agent, that toxicity from solvent is relatively less significant than dispersible solutions or emulsions, and that the preparation has excellent physical or chemical stability during storage.

However, water soluble or water dispersible polyoxyethylene alkyl ether are present in the form of paste or wax phase at room temperature in many cases, and thus when aqueous suspension concentrate is prepared by using the polyoxyethylene alkyl ether, gel may be easily formed due to the formation of liquid crystal structure of polyoxyethylene alkyl ether, etc. in aqueous solution during the preparation, and physical or chemical change such as caking, etc. during storage may be occurred. Therefore, the present invention provides a stable aqueous suspension concentrate composition comprising polyoxyethylene alkyl ether, without forming gel in the preparation process and cake during storage, in particular which is possible by properly selecting anti-gel forming and anti-caking agent, selected from one or more of the group consisting of ethyleneglycol, diethyleneglycol, propyleneglycol, and dipropylene-glycol; methacrylic acid-methyl methacrylate-polyethyleneglycol graft copolymer as a dispersant; wherein the weight ratio of polyoxyalkylene alkyl ether to anti-gel forming and anti-caking agent is 1:1.5 to 1:6.

It is another objective of the present invention to provide a method for controlling the plant pathogen, characterized in that the composition according to present invention is used by diluting with water.

### DISCLOSURE OF THE INVENTION

The present invention relates to a stable aqueous suspension concentrate composition comprising one or more substances selected from pesticides for controlling various plant diseases including ethaboxam, polyoxyethylene alkyl ether, anti-gel forming and anti-caking agent, selected from one or more of the group consisting of ethyleneglycol, diethyleneglycol, propyleneglycol, and dipropylene-glycol; methacrylic acid-methyl methacrylate-polyethyleneglycol graft copolymer as a dispersant; and water; wherein the weight ratio of polyoxyalkylene alkyl ether to anti-gel forming and anti-caking agent is 1:1.5 to 1:6. The stable aqueous suspension concentrate composition according to the present invention can additionally contain wetting agent, rheology modifier, preservative, and anti-foaming agent.

Proper selection of polyoxyalkylene alkyl ether, anti-gel forming and anti-caking agent and dispersant in the stable aqueous suspension composition according to the present invention is the most important in order to prevent gel formation in the preparation and cake formation during storage, caused from using polyoxyalkylene alkyl ether.

Polyoxyalkylene alkyl ether usable in the present invention has 12 to 18 carbon atoms, preferably 14 to 16 carbon atoms, and the average added mole number of polyoxyalkyleneoxide is 7 to 20, preferably 10 to 14. In addiction, polyoxyalkylene alkyl ether usable in the present invention is in the form of primary alcohol to which polyoxyethyleneoxide is added, or primary alcohol to which polyoxyethyleneoxide and polyoxypropyleneoxide are simultaneously added, preferably primary alcohol to which polyoxyethyleneoxide only is added. The alkyl group is straight-chained.

KONION CA12 (Greensoft Chem, Ltd., Korea) used in the Preparation and Comparative Preparation according to the present invention is polyoxyethylene cetyl ether (the average added mole number of ethyleneoxide = 12), KONION CA10 is polyoxyethylene cetyl ether (the average added mole number of ethyleneoxide = 10), KONION SA10 is polyoxyethylene stearyl ether (the average added mole number of ethyleneoxide = 10), KONION CA6 is polyoxyethylene cetyl ether (the average added mole number of ethyleneoxide = 6), and KONION OA12 is polyoxyethylene oleyl ether (the average added mole number of ethyleneoxide = 12).

Anti-gel forming and anti-caking agent usable in the present invention is glycol-based aqueous solvent selected from ethyleneglycol, diethyleneglyool, dipropyleneglyool, and propyleneglycol. However, propyleneglycol is preferred in order to maintain the preparation's anti-caking effect during storage even when the content of polyoxyalkylene alkyl ether in the composition of the present invention is high. Here, anti-gel forming and anti-caking agent also acts as anti-freezing gent.

As graft copolymer dispersant, methacrylic acid-methyl methacrylate-polyethyleneglyool copolymer is exemplified, and Tersperse 2500 (Huntsman Surfactant Australia, Australia), and Atbx 4913 (Uniqema, GB) are commercially available products. Tersperse 2500 used in the Preparation and Comparative Preparation of the present invention comprises about 30-60% of methacrylic acid-methyl methacrylate-polyethyleneglycol copolymer, with water, propyleneglycol, etc. Morwet D-425 (Witco, USA) used in the Comparative Preparation comprises sodium salt of naphthalene-formaldehyde condensate as major ingredient.

As wetting agent usable in the present invention, lauryl sodium sulfate, polyoxyalkylene alkyl ether, polyoxyalkylene alkyl phenyl ether sulfonate, dialkyl succinate, dialkyl naphthalene sulfonate, polyoxyethylene alkyl ether sulfate, acetylene-based unionic surfactant, etc. can be exemplified, and preferably dialkyl succinate can be used. The wetting agent used in the Preparation and Comparative Preparation of the present invention is EMPIMIN OP70 (Huntsman Surfactant, GB), comprising 70% of dioctyl succinate as major ingredient, and propyleneglycol for the rest.

As rheology modifier usable in the present invention, polysaccharides which can improve viscosity in aqueous solution phase, such as xanthan gum, gua gum, etc., can be used, but preferably xanthan gum can be used. A high concentration of fungicidal solution and polyoxyethylene alkyl ether for the present composition may be used, but clay mineral such as bentonite is not effective because clay mineral may cause cake during storage. Rheobgy modifier used in the Preparation and Comparative Preparation of the present invention is Rhodopol 23 (Rhodia Canada products, Canada), and its main ingredient is xanthan gum.

As preservative usable in the present invention, benzisothiazolinone or phenols can be used. The Preparation and Comparative Preparation of the present invention use Proxel GXL (Avecia products, USA), comprising benzisothiazoline as main ingredient.

As anti-foaming agent usable in the present invention, silicone-based anti-foaming agent, etc. can be used, and Corning Antifoam C (Dowcorning Co., Ltd. products, USA) is used in the Preparation and Comparative Preparation of the present invention.

Examples of the fungicidal active ingredient usable in the present invention may be ethaboxam (*N-*(cyano-2-thienylmethyl)-4-ethyl-2-(ethylamino)-5-thiazolecarboxamide), dimethomorph ((*E,Z* )-4-[3-(4-chlorophenyl)-3-(3,4-dimethoxyphenyl)-1-oxo-2-propenyl]-morpholine), metalaxyl-M (methyl *N-*(methoxyacetyl)-*N-*(2,6-xylyl)-D-alaninate), farmoxadone (5-methyl-5-(4-phenoxyphenyl)-3-(phenylamino)-2,4-oxazolidinedione), azoxystrobin (methyl (*E*)-2-[[6-(2-cyanophenoxy)-4-pyrimidinyl]oxy]-α-(methoxy-methylene)benzeneacetate), fluquinronazole (3-(2,4-dichlorophenyl)-6-fluro-((1*H*)-1,2,4-triazol-1-yl)-4(3*H*)-quinazonnone), tebuconazole((*RS*)-1-*p-*chlorophenyl-4,4-dimethyl-3-(1*H* - 1,2,4-triazol-1-ylmethyl)pentan-3-ol), triflumizole((*E* )-1-[1-[[4-chloro-2-(trifluoro-methyl)phenyl]imino]-2-propoxyethyl]-1*H*-imidazole), kresoxim-methyl(methyl(α*E*)-α-(methoxyimino)-2-[(2-methylphenoxy)methyl]benzeneacetate), trifloxystrobin (methyl(*E*)-methoxyimino-{(*E*)-α-[1-(α,α,α-trifluoro- *m* - tolyl)ethylidineaminooxy]-*o-*tolyl}acetate), propamocarb hydrochloride (propyl 3-(dimethylamino)propylcarbamate hydrochloride), difenoconazole (*cis,trans -* 3-chloro-4-[4-methyl-2-(1 *H*-1,2,4-triazol-1-ylmethyl)-1,3-dioxolan-2-yl]phenyl 4-chlorophenylether), metconazole (1 *RS*,5*RS*;1*RS*,5*SR* )-5-(4-chlorobenzyl)-2,2-dimethyl-1-(1 *H*-1,2,4-triazol-1-ylmethyl)-cyclopentanol), mepanipyrim (*N-*(4-methyl-6-prop-1-ynylpyrimidin-2-yl)aniline), cyazofamid (4-chloro-2-cyano-*N,N-*dimethyl-5-*p-*tolylimidazol-1-sulfonamide), iprovalicarb (isopropyl 2-methyl-1-[(1-*p-*tolylethyl)carbamoyl]-(S)-propylcarbamate), zoxamide (( *RS*)-3,5-dichloro-*N-*(3-chloro-1-ethyl-1-methyl-2-oxopropyl)- *p-*toluamide), iprodione (3-(3,5-dichlorophenyl)-*N*-isopropyl-2,4-dioxoimidazolidin-1-carboxamide), chlorothalonil (2,4,5,6-tetrachloro-1,3-benzene-dicarbonitrile), etc.

The fungicidal composition of the present invention comprises fungicidal active ingredient of 5 to 40 % by weight, preferably 10 to 30 % by weight; polyoxyalkylene alkyl ether of 3 to 15 % by weight, preferably 5 to 10 % by weight; anti-gel forming and anti-caking agent of 10 to 30 % by weight, preferably 13 to 25 % by weight; dispersant of 0.5 to 10 % by weight, preferably 1 to 5 % by weight; wetting agent of 0.1 to 5 % by weight, preferably 0.5 to 2 % by weight; solid or liquid additive containing preservative, anti-foaming agent, and rheobgy modifier of 0.3 to 5 % by weight, preferably 0.5 to 2 % by weight; and water of 25 to 70% by weight, preferably 35 to 70 % by weight. When the amount of fungicidal active ingredient is less than 5 % by weight, it is difficult to adjust the times of dilution for economical control of plant diseases. When the amount of fungicidal active ingredient exceeds 40 % by weight, it is difficult to maintain the stability of the preparation during storage.

The weight ratio of polyoxyalkylene alkyl ether to anti-gel forming and anti-caking agent in the present composition is preferably 1:1.5 to 1:6, more preferably 1:1.8 to 1:4. When the weight ratio of polyoxyalkylene alkyl ether to anti-gel forming and anti-caking agent is less than 1:1.5 or exceeds 1:6, it is difficult to maintain the stability of the preparation during storage.

To prepare the composition of the present invention, polyoxyalkylene alkyl ether should be necessarily dissolved in anti-gel forming and anti-caking agent, and then added to water. When polyoxyalkylene alkyl ether is directly added to water, gel is formed, and thus it is not possible to prepare the Composition. Specifically, a mixture of polyoxyalkylene alkyl ether and anti-gel forming and anti-caking agent should be maintained at 30 to 60 °C, and thereafter added to water, in order to prevent gel-forming and particle agglomeration, in preparing the composition.

The aqueous suspension concentrate composition of the present invention is used for controlling plant diseases. In order to control plant diseases by using the present Composition, the composition is uniformly diluted with water, and thereafter is sprayed on stems or leaves of plant or pathogen habitat with using sprayer such as sprinkling sprayer or pumped sprayer. When the aqueous suspension concentrate composition of the present invention is diluted with water, the concentration of the composition can be controlled between 0.1 to 5%, preferably 0.1 to 2%, at which the active ingredient is in biologically effective range.

The present invention is illustrated by the examples which follow. However, it should be understood that these examples are intended to illustrate the present invention, and cannot limit the scope of the present invention.

**Example**

The Preparations of the present aqueous suspension concentrate were showed in the following Tables 1, 2 and 3. To prepare the present aqueous suspension concentrate, at first, fungicide, dispersant, wetting agent, antifoaming agent, and a portion of water were mixed to make the active ingredient of fungicide about 20 to 50% by weight. Thereafter, the mixture was ground by using a suitable wetted miller to prepare mill base whose solid particle has an average diameter of about 1 to 3 µm, and which was maintained at about 20 to 40 °C. Aqueous xanthan gum solution is consisted of preservative, Rhodopol 23, and distilled water; and Rhodopol 23 was prepared to about 1 to 2% of aqueous solution. Polyoxyalkylene alkyl ether was completely dissolved by maintaining oven above about 50 °C, and propyleneglycol was added to the solution to dissolve the solution, which was maintained at about 30 to 60 °C. The remaining water was adjusted to about 30 to 60 °C, and each portion except for aqueous xanthan solution was slowly mixed with stirring by using a suitable mixer. Finally, the aqueous xanthan solution was added there to and mixed to prepare the final product. The reason to add and mix aqueous xanthan solution at the last step is to make mixing easy in the preparation process.

When the active ingredient was metalaxyl-M in the process for preparation of the example, the metalaxyl-M stock solution is liquid at room temperature, and thus metalaxyl-M was not ground, and was dissolved in the mixture of polyoxyalkylene alkyl ether and propyleneglycol for use.

Unless otherwise specified, the percentage in the present aqueous suspension concentrate containing the constituents represented in the following tables means weight percent (%).

**Table 1**

| | Preparations | | | | | | | |
|---|---|---|---|---|---|---|---|---|
| | 1 | 2 | 3 | 4 | 5 | 6 | 7 | 8 |
| Ethaboxam | 10% | 10% | 10% | 15% | 10% | 10% | 10% | 10% |
| Dimethomorph | - | - | - | - | 15% | - | - | - |
| Famoxadone | - | - | - | - | - | 9% | - | - |
| Azoxystrobine | - | - | - | - | - | - | 15% | - |
| Metalaxyl-M | - | - | - | - | - | - | - | 10% |
| Tersperse 2500 | 2.5% | 2.5% | 2.5% | 2.5% | 2.5% | 2.5% | 2.5% | 2.5% |
| EMPIMIN OP70 | 0.8% | 0.8% | 0.8% | 0.8% | 0.8% | 0.8% | 0.8% | 0.8% |
| Konion CA10 | 10% | - | - | - | - | - | - | - |
| Konion CA12 | - | 10% | - | - | 5% | 5% | 5% | 5% |
| Konion SA10 | - | - | 5% | 10% | - | - | - | - |
| Propyleneglycol | 20% | 20% | 20% | 20% | 13% | 13% | 13% | 20% |
| Rhodopol 23 | 0.15% | 0.15% | 0.15% | 0.1% | 0.1% | 0.1% | 0.1% | 0.1% |
| Proxel GXL | 0.2% | 0.2% | 0.2% | 0.2% | 0.2% | 0.2% | 0.2% | 0.2% |
| Dow Corning Antifoam C | 0.2% | 0.2% | 0.2% | 0.2% | 0.2% | 0.2% | 0.2% | 0.2% |
| Distilled water | residual | residual | residual | residual | residual | residual | residual | residual |
| Total | 100% | 100% | 100% | 100% | 100% | 100% | 100% | 100% |

**Table 2**

| | Preparations | | | | | | | |
|---|---|---|---|---|---|---|---|---|
| | 9 | 10 | 11 | 12 | 13 | 14 | 15 | 16 |
| Azoxystrobin | 15% | - | - | - | - | - | - | - |
| Dimethomorph | - | 15% | - | - | - | - | - | - |
| Famoxadone | - | - | 15% | - | - | - | - | - |
| Chlorothalonil | - | - | - | 15% | - | - | - | - |
| Fluquinconazole | - | - | - | - | 15% | - | - | - |
| Prophamocarb | - | - | - | - | - | 15% | - | - |
| hydrochloride | | | | | | | | |
| Cyazofamide | - | - | - | - | - | - | 15% | - |
| Tebuconazole | - | - | - | - | - | - | - | 15% |
| Tersperse 2500 | 2.5% | 2.5% | 2.5% | 2.5% | 2.5% | 2.5% | 2.5% | 2.5% |
| EMPIMIN OP70 | 0.8% | 0.8% | 0.8% | 0.8% | 0.8% | 0.8% | 0.8% | 0.8% |
| Konion CA12 | 10% | 10% | 10% | 10% | 10% | 10% | 10% | 10% |
| Propylene Glycol | 20% | 20% | 20% | 20% | 20% | 20% | 20% | 20% |
| Rhodopol 23 | 0.1% | 0.1% | 0.1% | 0.1% | 0.1% | 0.1% | 0.1% | 0.1% |
| Proxel GXL | 0.2% | 0.2% | 0.2% | 0.2% | 0.2% | 0.2% | 0.2% | 0.2% |
| Dow Corning Antifoam C | 0.2% | 0.2% | 0.2% | 0.2% | 0.2% | 0.2% | 0.2% | 0.2% |
| Distilled water | residual | residual | residual | residual | residual | residual | residual | residual |
| Total | 100% | 100% | 100% | 100% | 100% | 100% | 100% | 100% |

**Table 3**

| | Preparations | | | |
|---|---|---|---|---|
| | 17 | 18 | 19 | 20 |
| Iprovaldicarb | 15% | - | - | - |
| Zoxamide | - | 15% | - | - |
| Iprodione | - | - | 15% | - |
| Trifloxystrobin | - | - | - | 15% |
| Tersperse 2500 | 2.5% | 2.5% | 2.5% | 2.5% |
| EMPIMINOP70 | 0.8% | 0.8% | 0.8% | 0.8% |
| Konion CA12 | 10% | 10% | 10% | 10% |
| Propyleneglycol | 20% | 20% | 20% | 20% |
| Rhodopol 23 | 0.1 % | 0.1 % | 0.1 % | 0.1 % |
| Proxel GXL | 0.2% | 0.2% | 0.2% | 0.2% |
| Dow Corning Antifoam C | 0.2% | 0.2% | 0.2% | 0.2% |
| Distilled water | residual | residual | residual | residual |
| Total | 100% | 100% | 100% | 100% |

**Comparative Example**

Comparative examples were shown in the following Table 4, and the Preparations were obtained according to the same procedure as the above Preparation. The percentage of the aqueous suspension concentrate composition containing the constituents represented in the following table means weight percent (%).

**Table 4**

| | Comparative examples | | |
|---|---|---|---|
| | 1 | 2 | 3 |
| Ethaboxam | 15% | 15% | 15% |
| Morwet D-425 | 3% | - | - |
| Tersperse 2500 | - | 2.5% | 2.5% |
| EMPIMIN OP70 | 0.8% | 0.8% | 0.8% |
| Konion CA12 | 10% | 10% | - |
| Konion OA12 | - | - | 10% |
| Propyleneglycol | 20% | 13% | 20% |
| Rhodopol 23 | 0.1% | 0.1% | 0.1% |
| Proxel GXL | 0.2% | 0.2% | 0.2% |
| Dow Corning Antifoam C | 0.2% | 0.2% | 0.2% |
| Distilled water | residual | residual | residual |
| Total | 100% | 100% | 100% |

**Test Example: Evaluation of the storage stability to the aqueous suspension concentrate composition**

To evaluate the storage stability of the Preparations, and Preparations of the Comparative Example, to the aqueous suspension concentrates of the present invention, the samples were observed by the naked eye to see the presence of caking while they were maintained at elevated rendition.

To evaluate stability of the aqueous suspension concentrates, each 50 ml of grass bottle was charged with 40 ml of test samples, covered, stored in oven maintaining 54 ( ± 2) °C for two weeks, and then observed for change of the appearance.

The test results were shown in Table 5. The aqueous suspension concentrate of the Preparation did not form cake, and thus it was assessed to be stable. However, it was confirmed that the aqueous suspension concentrate of the Comparative Preparation did form cake, together with viscosity increase during storage.

**Table 5**

| Preparations | Appearance after storage | Preparations and Comparative Preparations | Appearance after storage |
|---|---|---|---|
| Preparation 1 | Good | Preparation 13 | Good |
| Preparation 2 | Good | Preparation 14 | Good |
| Preparation 3 | Good | Preparation 15 | Good |
| Preparation 4 | Good | Preparation 16 | Good |
| Preparation 5 | Good | Preparation 17 | Good |
| Preparation 6 | Good | Preparation 18 | Good |
| Preparation 7 | Good | Preparation 19 | Good |
| Preparation 8 | Good | Preparation 20 | Good |
| Preparation 9 | Good | Comparative Preparation 1 | Caking |
| Preparation 10 | Good | Comparative Preparation 2 | Caking |
| Preparation 11 | Good | Comparative Preparation 3 | Caking |
| Preparation 12 | Good | - | - |

It has been known that polyoxyalkylene alkyl ether having specific structure improves efficacy of various fungicides including ethaboxam. However, when polyoxyalkylene alkyl ether is added to aqueous suspension concentrate, it is possible to form gel in the preparation or cake during storage due to property of polyalkylene alkyl ether, and thus it is difficult to manufacture polyoxyalkylene alkyl ether as aqueous suspension concentrate. The present invention provides a stable aqueous suspension concentrate preparation which does not form gel during preparation or cake during storage, even when water soluble or water dispersible polyoxyethylene alkyl ether, particularly present in the form of paste or wax phase at room temperature, is added. In particular, the aqueous suspension concentrate of the present invention contains proper polyoxyethylene alkyl ether which is known as substance to improve the efficacy of various fungicides, it is expected that the aqueous suspension concentrate of the present invention is effective in the aspect of biological activity when used as plant diseases-controlling agent.

## Claims

1. An aqueous suspension concentrate composition comprising: one or more fungicide as an active ingredient; water soluble or water dispersible polyoxyalkylene alkyl ether; anti-gel forming and anti-caking agent, selected from one or more of the group consisting of ethyleneglycol, diethyleneglycol, propyleneglycol, and dipropylene-glycol; methacrylic acid-methyl methacrylate-polyethyleneglycol graft copolymer as a dispersant; and water; wherein the weight ratio of polyoxyalkylene alkyl ether to anti-gel forming and anti-caking agent is 1:1.5 to 1:6.

2. The aqueous suspension concentrate composition according to claim 1, wherein the polyoxyalkylene alkyl ether is in the form of primary alcohol to which polyoxyethyleneoxide is added, or polyoxyethyleneoxide and polyoxypropyleneoxide are simultaneously added.

3. The aqueous suspension concentrate composition according to claim 1, wherein the polyoxyalkylene of the polyoxyalkylene alkyl ether is polyoxyethylene.

4. The aqueous suspension concentrate composition according to any one of claims 1 to 3, wherein the alkyl group of the polyoxyalkylene alkyl ether is straight-chained, and has 12 to 18 carbon atoms, and the average added mole number of polyoxyalkyleneoxide is 7 to 20.

5. The aqueous suspension concentrate composition according to claim 4, wherein the alkyl group of the polyoxyalkylene alkyl ether has 14 to 16 carbon atoms.

6. The aqueous suspension concentrate composition according to claim 4, wherein the average added mole number of the polyoxyalkyleneoxide is 10 to 14.

7. The aqueous suspension concentrate composition according to claim 4, wherein the alkyl group of the polyoxyalkylene alkyl ether is straight-chained, and has 14 to 16 carbon atoms, and the average added mole number of polyoxyalkyleneoxide is 10 to 14.

8. The aqueous suspension concentrate composition according to claim 1, wherein the anti-gel forming and anti-caking agent is propyleneglycol.

9. The aqueous suspension concentrate composition according to claim 1, wherein the fungicidal active ingredient is one or more selected from the group consisting of ethaboxam, dimethomorph, metalaxyl-M, famoxadone, azoxystrobin, fluquinconazole, tebuconazole, triflumizole, kresoxim-methyl, trifloxystrobin, propamocarb hydrochloride, difenconazole, metconazole, mepanipyrim, cyazofamid, iprovalicarb, zoxamide, iprodione, and chlorothalonil.

10. The aqueous suspension concentrate composition according to claim 1, wherein the polyoxyalkylene alkyl ether is 3 to 15 % by weight based on the composition.

11. The aqueous suspension concentrate composition according to claim 10, wherein the polyoxyalkylene alkyl ether is 5 to 10 % by weight based on the composition.

12. The aqueous suspension concentrate composition according to claim 1, wherein the anti-gel forming and anti-caking agent is 10 to 30 % by weight based on the composition.

13. The aqueous suspension concentrate composition according to claim 12, wherein the anti-gel forming and anti-caking agent is 13 to 25 % by weight based on the composition.

14. The aqueous suspension concentrate composition according to claim 1, wherein methacrylic acid-methyl methacrylate-polyethyleneglycol graft copolymer is 0.5 to 10 % by weight based on the composition.

15. The aqueous suspension concentrate composition according to claim 1, wherein the fungicidal active ingredient is 5 to 40 % by weight based on the composition.

16. The aqueous suspension concentrate composition according to claim 1, wherein the fungicidal active ingredient is 10 to 30 % by weight based on the composition.

17. The aqueous suspension concentrate composition according to claim 1, wherein water is 25 to 70 % by weight based on the composition.

18. The aqueous suspension concentrate composition according to claim 1, wherein the weight ratio of polyoxyalkylene alkyl ether to anti-gel forming and anti-caking agent is 1:1.8 to 1:4.

19. The aqueous suspension concentrate composition according to claim 1, further comprising one or more additive selected from the group consisting of wetting agent, preservative, rheology modifier, and anti-foaming agent.

20. The aqueous suspension concentrate composition according to claim 19, wherein the wetting agent is sodium salt of dialkyl succinic acid.

21. A method for controlling plant disease, **characterized in that** the fungicidal composition according to any preceding claim is applied to leaves or stems of plants or pathogen habitat after the composition is diluted with water to biologically effective level.

## Patentansprüche

1. Wässrige Suspensionskonzentratzusammensetzung, die Folgendes umfasst: ein oder mehrere Fungizide als Wirkstoff; wasserlöslichen oder wasserdispergierbaren Polyoxyalkylenalkylether; Antigelier- und Antibackmittel, das aus einem oder mehreren der Gruppe ausgewählt sind, die aus Folgenden besteht: Ethylenglycol, Diethylenglycol, Propylenglycol und Dipropylenglycol; Methacrylsäure-Methylmethacrylat-Polyethylenglycol-Pfropfcopolymer als Dispergiermittel; und Wasser; worin das Gewichtsverhältnis von Polyoxyalkylenalkylether zum Antigelier- und Antibackmittel 1 : 1,5 bis 1 : 6 beträgt.

2. Wässrige Suspensionskonzentratzusammensetzung nach Anspruch 1, worin der Polyoxyalkylenalkylether in Form eines primären Alkohols vorliegt, zu dem Polyoxyethylenoxid zugegeben wird oder Polyoxyethylenoxid und Polyoxypropylenoxid gleichzeitig zugegeben werden.

3. Wässrige Suspensionskonzentratzusammensetzung nach Anspruch 1, worin das Polyoxyalkylen des Polyoxyalkylenalkylethers Polyoxyethylen ist.

4. Wässrige Suspensionskonzentratzusammensetzung nach einem der Ansprüche 1 bis 3, worin die Alkylgruppe des Polyoxyalkylenalkylethers geradkettig ist und 12 bis 18 Kohlenstoffatome hat und die durchschnittliche zugefügte Molzahl von Polyoxyalkylenoxid 7 bis 20 beträgt.

5. Wässrige Suspensionskonzentratzusammensetzung nach Anspruch 4, worin die Alkylgruppe des Polyoxyalkylenalkylethers 14 bis 16 Kohlenstoffatome hat.

6. Wässrige Suspensionskonzentratzusammensetzung nach Anspruch 4, worin die durchschnittliche zugefügte Molzahl von Polyoxyalkylenoxid 10 bis 14 beträgt.

7. Wässrige Suspensionskonzentratzusammensetzung nach Anspruch 4, worin die Alkylgruppe des Polyoxyalkylenalkylethers geradkettig ist und 14 bis 16 Kohlenstoffatome hat und die durchschnittliche zugefügte Molzahl von Polyoxyalkylenoxid 10 bis 14 beträgt.

8. Wässrige Suspensionskonzentratzusammensetzung nach Anspruch 1, worin das Antigelier- und Antibackmittel Propylenglycol ist.

9. Wässrige Suspensionskonzentratzusammensetzung nach Anspruch 1, worin der Fungizidwirkstoff einer oder mehrere aus der Gruppe ausgewählt ist, die aus Folgenden besteht: Ethaboxam, Dimethomorph, Metalaxyl-M, Famoxadon, Azoxystrobin, Fluquinconazol, Tebuconazol, Triflumizol, Kresoxim-methyl, Trifloxystrobin, Propamocarb-Hydrochlorid, Difenconazol, Metconazol, Mepanipyrim, Cyazofamid, Iprovalicarb, Zoxamid, Iprodion und Chlorthalonil.

10. Wässrige Suspensionskonzentratzusammensetzung nach Anspruch 1, worin der Polyoxyalkylenalkylether zu 3 bis 15 Gewichts-%, bezogen auf die Zusammensetzung, vorliegt.

11. Wässrige Suspensionskonzentratzusammensetzung nach Anspruch 10, worin der Polyoxyalkylenalkylether zu 5 bis 10 Gewichts-%, bezogen auf die Zusammensetzung, vorliegt.

12. Wässrige Suspensionskonzentratzusammensetzung nach Anspruch 1, worin das Antigelier- und Antibackmittel zu 10 bis 30 Gewichts-%, bezogen auf die Zusammensetzung, vorliegt.

13. Wässrige Suspensionskonzentratzusammensetzung nach Anspruch 12, worin das Antigelier- und Antibackmittel zu 13 bis 25 Gewichts-%, bezogen auf die Zusammensetzung, vorliegt.

14. Wässrige Suspensionskonzentratzusammensetzung nach Anspruch 1, worin das Methacrylsäure-Methylmethacrylat-Polyethylenglycol-Pfropfcopolymer zu 0,5 bis 10 Gewichts-%, bezogen auf die Zusammensetzung, vorliegt.

15. Wässrige Suspensionskonzentratzusammensetzung nach Anspruch 1, worin der Fungizidwirkstoff zu 5 bis 40 Gewichts-%, bezogen auf die Zusammensetzung, vorliegt.

16. Wässrige Suspensionskonzentratzusammensetzung nach Anspruch 1, worin der Fungizidwirkstoff zu 10 bis 30 Gewichts, bezogen auf die Zusammensetzung, vorliegt.

17. Wässrige Suspensionskonzentratzusammensetzung nach Anspruch 1, worin Wasser zu 25 bis 70 Gewichts-%, bezogen auf die Zusammensetzung, vorliegt.

18. Wässrige Suspensionskonzentratzusammensetzung nach Anspruch 1, worin das Gewichtsverhältnis von Polyoxyalkylenalkylether zum Antigelier- und Antibackmittel 1 : 1,8 bis 1 : 4 beträgt.

19. Wässrige Suspensionskonzentratzusammensetzung nach Anspruch 1, die weiterhin ein oder mehrere Additive umfasst, die aus der Gruppe ausgewählt sind, die aus Benetzungsmittel, Konservierungsmittel, Rheologiemodifizierer und Antischaummittel besteht.

20. Wässrige Suspensionskonzentratzusammensetzung nach Anspruch 19, worin das Benetzungsmittel ein Natriumsalz von Dialkylbernsteinsäure ist.

21. Verfahren zur Bekämpfung von Pflanzenkrankheiten, **dadurch gekennzeichnet, dass** die Fungizidzusammensetzung nach einem vorstehenden Anspruch auf Blätter oder Stämme von Pflanzen oder das Habitat für Pathogene aufgetragen wird nachdem die Zusammensetzung mit Wasser auf eine biologisch wirksame Höhe verdünnt ist.

## Revendications

1. Composition de concentré en suspension aqueuse comprenant : un ou plusieurs fongicides comme ingrédient actif ; de l'éther polyoxyalkylènealkylique soluble dans l'eau ou dispersible dans l'eau ; un agent anti-formation de gel et antiagglomérant sélectionné parmi un ou plusieurs du groupe constitué de l'éthylèneglycol, du diéthylèneglycol, du propylèneglycol et du dipropylèneglycol ; un copolymère greffé acide méthacrylique-méthacrylate de méthyle-polyéthylèneglycol comme dispersant ; et de l'eau ; dans laquelle le rapport pondéral entre éther polyoxyalkylènealkylique et agent anti-formation de gel et antiagglomérant est de 1/1,5 à 1/6.

2. Composition de concentré en suspension aqueuse selon la revendication 1, dans laquelle l'éther polyoxyalkylènealkylique est sous la forme d'alcool primaire auquel du polyoxyéthylèneoxyde est ajouté, ou du polyoxyéthylèneoxyde et du polyoxypropylèneoxyde sont ajoutés simultanément.

3. Composition de concentré en suspension aqueuse selon la revendication 1, dans laquelle le polyoxyalkylène de l'éther polyoxyalkylènealkylique est le polyoxyéthylène.

4. Composition de concentré en suspension aqueuse selon l'une quelconque des revendications 1 à 3, dans laquelle le groupe alkyle de l'éther polyoxyalkylènealkylique est à chaîne droite et possède 12 à 18 atomes de carbone, et le nombre molaire ajouté moyen du polyoxyalkylèneoxyde est de 7 à 20.

5. Composition de concentré en suspension aqueuse selon la revendication 4, dans laquelle le groupe alkyle de l'éther polyoxyalkylènealkylique possède 14 à 16 atomes de carbone.

6. Composition de concentré en suspension aqueuse selon la revendication 4, dans laquelle le nombre molaire ajouté moyen du polyoxyalkylèneoxyde est de 10 à 14.

7. Composition de concentré en suspension aqueuse selon la revendication 4, dans laquelle le groupe alkyle de l'éther polyoxyalkylènealkylique est à chaîne droite et possède 14 à 16 atomes de carbone, et le nombre molaire ajouté moyen du polyoxyalkylèneoxyde est de 10 à 14.

8. Composition de concentré en suspension aqueuse selon la revendication 1, dans laquelle l'agent anti-formation de gel et antiagglomérant est le propylèneglycol.

9. Composition de concentré en suspension aqueuse selon la revendication 1, dans laquelle l'ingrédient actif fongicide est un ou plusieurs sélectionnés parmi le groupe constitué de l'éthaboxam, du diméthomorphe, du métalaxyl-M, du famoxadone, de l'azoxystrobine, du fluquinconazole, du tébuconazole, du triflumizole, du krésoxim-méthyle, du trifloxystrobine, du chlorhydrate de propamocarb, du difenconazole, du metconazole, du mépanipyrim, du cyazofamide, de l'iprovalicarb, du zoxamide, de l'iprodione et du chlorothalonil.

10. Composition de concentré en suspension aqueuse selon la revendication 1, dans laquelle l'éther polyoxyalkylènealkylique est de 3 à 15 % en poids par rapport à la composition.

11. Composition de concentré en suspension aqueuse selon la revendication 10, dans laquelle l'éther polyoxyalkylènealkylique est de 5 à 10 % en poids par rapport à la composition.

12. Composition de concentré en suspension aqueuse selon la revendication 1, dans laquelle l'agent anti-formation de gel et antiagglomérant est de 10 à 30 % en poids par rapport à la composition.

13. Composition de concentré en suspension aqueuse selon la revendication 12, dans laquelle l'agent anti-formation de gel et antiagglomérant est de 13 à 25 % en poids par rapport à la composition.

14. Composition de concentré en suspension aqueuse selon la revendication 1, dans laquelle le copolymère greffé acide méthacrylique-méthacrylate de méthyle-polyéthylèneglycol est de 0,5 à 10 % en poids par rapport à la composition.

15. Composition de concentré en suspension aqueuse selon la revendication 1, dans laquelle l'ingrédient actif fongicide est de 5 à 40 % en poids par rapport à la composition.

16. Composition de concentré en suspension aqueuse selon la revendication 1, dans laquelle l'ingrédient actif fongicide est de 10 à 30 % en poids par rapport à la composition.

17. Composition de concentré en suspension aqueuse selon la revendication 1, dans laquelle l'eau est de 25 à 70 % en poids par rapport à la composition.

18. Composition de concentré en suspension aqueuse selon la revendication 1, dans laquelle le rapport pondéral entre éther polyoxyalkylènealkylique et agent anti-formation de gel et antiagglomérant est de 1/1,8 à 1/4.

19. Composition de concentré en suspension aqueuse selon la revendication 1, comprenant en outre un ou plusieurs additifs sélectionnés parmi le groupe constitué d'un agent mouillant, d'un conservateur, d'un modificateur de rhéologie et d'un agent anti-mousse.

20. Composition de concentré en suspension aqueuse selon la revendication 19, dans laquelle l'agent mouillant est le sel sodique d'acide dialkylsuccinique.

21. Procédé pour contrôler une maladie végétale, **caractérisé en ce que** la composition fongicide selon l'une quelconque des revendications précédentes est appliquée aux feuilles ou tiges de plantes ou à l'habitat pathogène après dilution de la composition avec de l'eau jusqu'à un niveau biologiquement efficace.
